(19) Europäisches Patentamt
European Patent Office
Office européen des brevets

(11) EP 2 728 404 A2

(12) **EUROPEAN PATENT APPLICATION**

(43) Date of publication:
07.05.2014 Bulletin 2014/19

(51) Int Cl.:
*G02F 1/29* (2006.01)  *G02F 1/133* (2006.01)

(21) Application number: 13171822.3

(22) Date of filing: 13.06.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 30.10.2012 JP 2012238752

(71) Applicant: Kabushiki Kaisha Toshiba
Tokyo 105-8001 (JP)

(72) Inventors:
• Momonoi, Yoshiharu
Tokyo, 105-8001 (JP)

• Kashiwagi, Masako
Tokyo, 105-8001 (JP)
• Takagi, Ayako
Tokyo, 105-8001 (JP)
• Uehara, Shinichi
Tokyo, 105-8001 (JP)

(74) Representative: HOFFMANN EITLE
Patent- und Rechtsanwälte
Arabellastrasse 4
81925 München (DE)

(54) **Liquid crystal lens device and method of driving the same**

(57) A liquid crystal lens device according to an embodiment includes: a first substrate; a pair of first electrodes on a first surface of the first substrate, extending in a first direction, and arranged in a second direction perpendicular to the first direction; a pair of second electrodes between the pair of first electrodes on the first surface, extending in the first direction, and arranged in the second direction; third electrodes each between one of the first electrodes and one of the second electrodes on the first surface, extending in the first direction, and arranged in the second direction; a second substrate including a second surface facing the first surface; a counter electrode on the second surface of the second substrate; and a liquid crystal layer between the first substrate and the second substrate.

FIG. 1

## Description

### FIELD

An embodiment of the present invention relates to a liquid crystal lens device and a method of driving the same.

### BACKGROUND

A liquid crystal optical element is known, which uses the birefringence of liquid crystal molecules to change the distribution of refractive index in accordance with the application of voltage. Furthermore, there is a stereoscopic image display apparatus obtained by combining such a liquid crystal optical element and an image display unit.

In such a stereoscopic image display apparatus, the state in which an image displayed on the image display unit enters the eyes of a viewer as it is, and the state in which the image displayed on the image display unit enters the eyes of the viewer as a plurality of parallax images are switched by changing the refractive index distribution of the liquid crystal optical element. In this manner, a two-dimensional image display operation and a three-dimensional image display operation can be performed. A technique of changing a light path using an optical principle of Fresnel zone plate is also known. There is a demand for such a display apparatus with a high display quality.

### BRIEF DESCRIPTION OF THE DRAWINGS

FIG. 1 is a cross-sectional view showing a liquid crystal optical element of a liquid crystal lens device according to an embodiment.
FIG. 2 is a block diagram showing an image display apparatus including the liquid crystal optical element of the embodiment.
FIG. 3 is a drawing showing a drive waveform in a case where the optical path of the liquid crystal optical element of the embodiment is changed.
FIG. 4 is a drawing showing an electric field distribution in a case where the optical path of the liquid crystal optical element of the embodiment is changed.
FIG. 5 is an enlarged view of the liquid crystal optical element shown in FIG. 1.
FIG. 6 shows an electric field distribution in a case where the optical path of a liquid crystal optical element according to a comparative example is changed.
FIG. 7 shows graphs representing the refractive indexes of the liquid crystal optical elements of the embodiment and the comparative example in the stationary state.

FIG. 8 shows graphs representing the time series variation in the crosstalk when a two-dimensional image display is switched to a three-dimensional image display in the liquid crystal optical elements according to the embodiment and the comparative example.

### DETAILED DESCRIPTION

A liquid crystal lens device according to an embodiment includes: a first substrate; a pair of first electrodes on a first surface of the first substrate, extending in a first direction, and arranged in a second direction perpendicular to the first direction; a pair of second electrodes between the pair of first electrodes on the first surface, extending in the first direction, and arranged in the second direction; third electrodes each between one of the first electrodes and one of the second electrodes on the first surface, extending in the first direction, and arranged in the second direction; a second substrate including a second surface facing the first surface of the first substrate; a counter electrode on the second surface of the second substrate; a liquid crystal layer between the first substrate and the second substrate; and a driving unit configured to apply a first voltage between the first electrode and the counter electrode, to apply a second voltage including the same polarity as the first voltage between the second electrode and the counter electrode, and to apply a third voltage including the same polarity as the first voltage between the third electrode and the counter electrode, an absolute value of the second voltage being less than an absolute value of the first voltage, and an absolute value of the third voltage being less than the absolute value of the second voltage.

Hereinafter, an embodiment will be described with reference to the accompanying drawings.

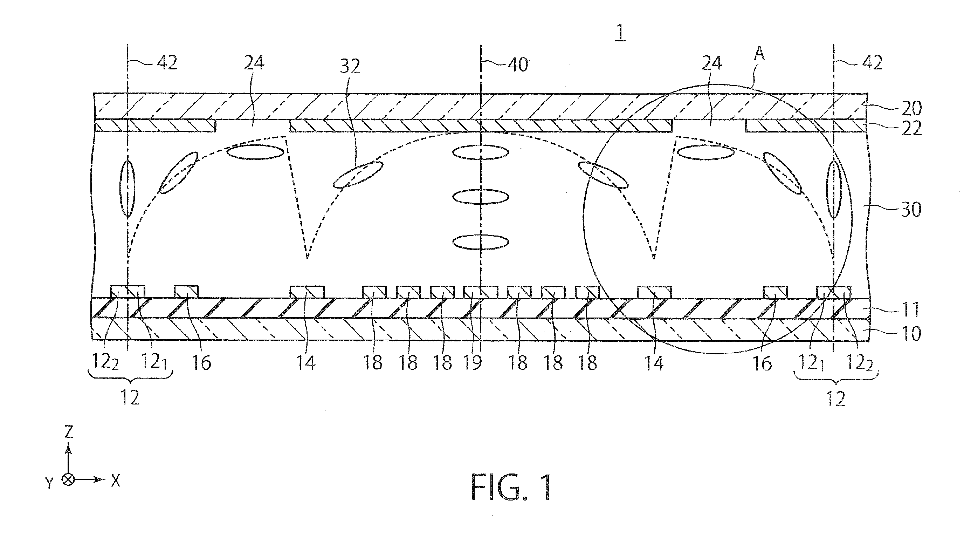

A liquid crystal lens device according to an embodiment will be described. This liquid crystal lens device includes a liquid crystal optical element 1. FIG. 1 shows a cross section of the liquid crystal optical element 1, which includes a first substrate 10, a second substrate 20 arranged to face the first substrate 10, and a liquid crystal layer 30, being sandwiched between the first substrate 10 and the second substrate 20, and functioning as a liquid crystal GRIN (Gradient Index) lens, in which the refractive index changes in its plane.

An insulating layer 11 is provided onto a surface of the first substrate 10 facing the second substrate 20. Onto the insulating layer 11, a plurality of first electrodes 12, a plurality of second electrodes 14, a plurality of third electrodes 16, a plurality of fourth electrodes 18, and a plurality of fifth electrodes 19 are provided, The first to the fifth electrodes 12, 14, 16, 18, and 19 are arranged to extend in the Y direction shown in FIG. 1.

A pair of first electrodes 12, which are adjacent to each other, is arranged at positions corresponding to ends of a Fresnel lens, and serve as common electrodes for adjacent Fresnel lenses. That is, each first electrode 12 is divided into two by an lens end central axis 42, one half $12_1$ serving as an lens end electrode of the corresponding Fresnel lens, and the other half $12_2$ serving as a lens end electrode of a Fresnel lens adjacent to the corresponding Fresnel lens. At the central position in the X direction of the pair of first electrodes 12, a central axis corresponding to the lens center of the Fresnel lens (hereinafter also referred to as the "lens center") 40 is present. One of the fifth electrodes 19 is located on the lens center 40. That is, the fifth electrode 19 serves as a central electrode for the corresponding Fresnel lens. As will be described later, the voltage of the central electrode 19 is set to be at a reference voltage (GND). Accordingly, the central electrode 19 is not necessarily provided.

The second electrodes 14 are provided between the pair of first electrodes 12 at positions corresponding to uneven points of the Fresnel lens so as to be axisymmetric relative to the lens center 40. The second electrodes 14 are also called "Fresnel electrodes."

Each of the third electrodes 16 is provided between one of the Fresnel electrodes 14 and one of the lens end electrodes 12. The third electrodes 16 are also called "lens end auxiliary electrodes)."

The fourth electrodes 18 are arranged at positions corresponding to a lens surface of the Fresnel lens so as to be axisymmetric relative to the lens center 40. That is, each auxiliary electrode 18 is provided between one of the Fresnel electrodes 14 and the central electrode 19. The fourth electrodes 18 are also called "auxiliary electrodes."

The refractive index of a lens is the lowest at the lens ends. Accordingly, in many cases, the voltage to be applied to each lens end is set to be high. If the thickness of the lens layer becomes thinner, in order to obtain the lens performance, uneven points are created as in a Fresnel lens, and the function of lens can be obtained by the gradient of refractive index difference. In order to obtain the lens performance, in many cases, the voltage to be applied to each lens end electrode 12 differs from the voltage to be applied to each Fresnel electrode 14 for controlling the uneven point. If the refractive index distribution from an uneven point to the lens center 40 does not match a desired lens curve, it is possible to control the refractive index distribution by the auxiliary electrodes 18.

Onto a surface of the second substrate 20 facing the first substrate 10, a sixth electrode 22 is provided. The sixth electrode 22 is arranged on the entire surface of the second substrate 20 facing the first substrate 10. The sixth electrode 22 is also called "counter electrode." In this embodiment, notch portions 24 are provided in regions of the counter electrode 22 facing regions outside of the Fresnel electrodes 14, i.e., regions each facing a region between one of the lens end auxiliary electrodes 16 and one of the Fresnel lenses 14. A pair of a notch portion 24 and a corresponding Fresnel lens 14 forms a maximum point and a minimum point of the refractive index of the Fresnel lens, and makes the change from the minimum point to the maximum point sharp. The notch portions 24 also extend in the Y direction. Incidentally, the notch portions are not necessarily provided, but they are preferably provided. The first substrate 10, the first to the fifth electrodes 12, 14, 16, 18, and 19 the second substrate 20, and the counter electrode 22 are permeable to light, i.e., transparent.

The first substrate 10 and the second substrate 20 are formed of a transparent material such as glass, a resin, etc. The first substrate 10 and the second substrate 20 are each in a form of a plate or sheet having a thickness of, for example, 50 micrometers ($\mu$m) or more, and 2000 $\mu$m or less. The thickness can be arbitrarily determined.

The first to the fifth electrodes 12, 14, 16, 18, and 19 and the counter electrode 22 contain an oxide containing at least one (type of) element selected from the group consisting of, for example, In, Sn, Zn, and Ti. For example, ITO (Indium Tin Oxide) can be used to form these electrodes. For example, at least one of $In_2O_3$ and $SnO_3$ can be used. The thicknesses of these electrodes are set so that, for example, a high transmissivity can be obtained for a visible light.

The pitch of the first electrodes 12 is set so as to compatible with a desired specification (characteristics of a lens of refractive index distribution type).

The liquid crystal layer 30 contains a liquid crystal material, i.e., Nematic liquid crystal (which is in a Nematic phase at a temperature at which the liquid crystal optical element 1 is used). The liquid crystal material has a positive or negative dielectric anisotropy. In the case of the positive dielectric anisotropy, the initial alignment of the liquid crystal in the liquid crystal layer 30 (alignment in the state where no voltage is applied to the liquid crystal layer 30) is, for example, substantially horizontal alignment. In the case of the negative dielectric anisotropy, the initial alignment of the liquid crystal layer 30 is substantially vertical alignment.

Herein, with respect to the horizontal alignment, the angle between the director of liquid crystal (long axes of liquid crystal molecules 32) and the X-Y plane (pretilt angle) is 0° or more and 30° or less. With respect to the vertical alignment, for example, the pretilt angle is 60° or more and 90° or less. At least in one of the initial alignment and the alignment when a voltage is applied, the director of liquid crystal has a component parallel to the X axis.

Hereinafter, the case will be described where the liquid crystal contained in the liquid crystal layer 30 has a positive dielectric anisotropy, and the initial alignment is a substantially horizontal alignment.

In the case of substantially horizontal alignment, when a projection is performed onto the X-Y plane in the initial alignment, the director is substantially parallel to the X axis. For example, when projection is performed onto the X-Y plane, the (absolute value of the) angle between the director and the X axis direction is 15° or less. The alignment in the liquid crystal layer 30 near the first substrate 10 is antiparallel to the alignment in the liquid crystal layer 30 near the second substrate 20. That is, the initial alignment is not the splay alignment.

An alignment film (not shown in the drawings) can also be provided onto the first substrate 10. In such a case, the first to the fifth electrodes 12, 14, 16, 18, and 19 are arranged between the alignment film and the first substrate 10.

A further alignment film (not shown in the drawings) can also be provided onto the second substrate 20. In such a case, the counter electrode 22 is arranged between the further alignment film and the second substrate 20. These alignment films may be formed of, for example, a polyimide. The initial alignment of the liquid crystal layer 30 can be obtained by performing, for example, a rubbing process on the alignment films. The direction of the rubbing process performed on the alignment film provided onto the first substrate 10 is antiparallel to the direction of the rubbing process performed on the alignment film provided onto the second substrate 20. The initial alignment can also be obtained by performing a light emitting process onto the alignment films.

The alignment of the liquid crystal in the liquid crystal layer 30 is changed by applying a voltage between the first electrodes 12 and the counter electrode 22, and between the second to the fourth electrodes 14, 16, and 18 and the counter electrode 22. Due to this change, a refractive index distribution is formed in the liquid crystal layer 30, thereby changing the direction along which light incident on the liquid crystal optical element 1 moves. This change in moving direction of light is mainly caused by a refractive effect.

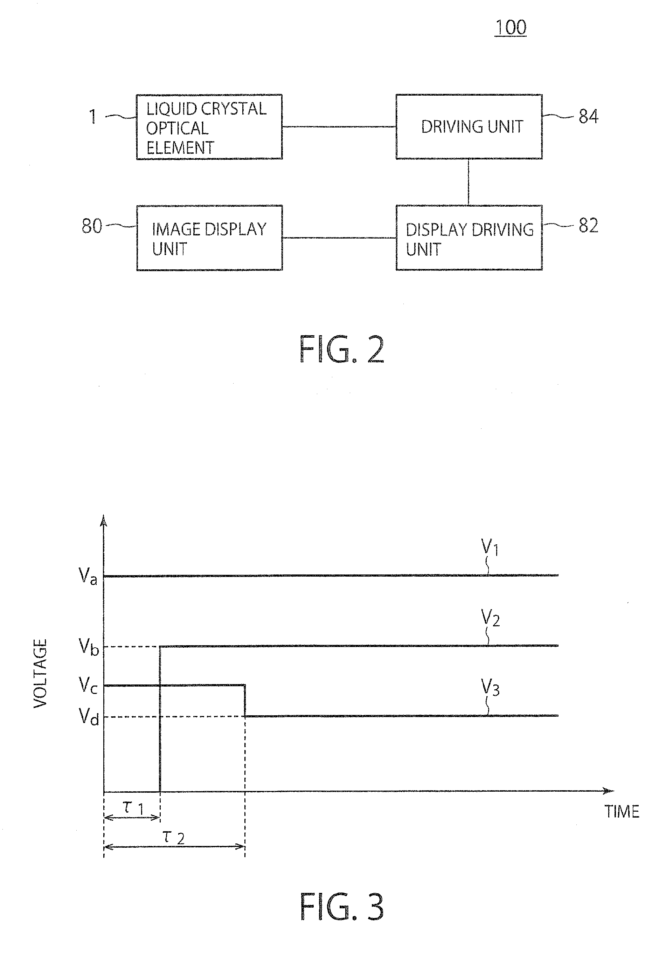

Next, the characteristics of the liquid crystal lens device according to the embodiment will be described with reference to FIGs. 2 to 4.

The liquid crystal lens device according to the embodiment is used for an image display apparatus 100, which includes the liquid crystal optical element 1 according to this embodiment, an image display unit 80, a display driving unit 82 for driving the image display unit 80, and a driving unit 84 for driving the liquid crystal optical element 1, as shown in FIG. 2. The liquid crystal lens device according to the embodiment includes the liquid crystal optical element 1 and the driving unit 84.

An arbitrarily selected display device can be used as the image display unit 80. For example, a liquid crystal display device, organic EL display device, or plasma display device can be used.

The liquid crystal optical element 1 is stacked on the image display unit 80. The first substrate 10 of the liquid crystal optical element 1 is arranged on the side of the image display unit 80, and the second substrate 20 is arranged so as to be more distant from the image display unit 80 than the first substrate 10. The image display unit 80 causes light containing image information to be incident on the liquid crystal layer 30, generates light modulated in accordance with a signal supplied form the display driving unit 82, and emits light including, for example, a plurality of parallax images. As will be described layer, the liquid crystal optical element 1 has an operation state for changing a light path and an operation state for not substantially changing a light path. When light is incident on the liquid crystal optical element 1 in the state of changing a light path, the image display apparatus 100 supplies, for example, a three-dimensional image display. Furthermore, for example, in the operation state of not substantially changing a light path, the image display apparatus 100 supplies, for example, a two-dimensional image display.

The driving unit 84 can be connected to the display driving unit 82 in either a wired or wireless manner (by an electric method or optical method). Furthermore, the image display apparatus 100 can further include a control unit (not shown in the drawings) for controlling the driving unit 84 and the display driving unit 82.

The driving unit 84 is electrically connected to the first to the fifth electrodes 12, 14, 16, 18, and 19 and the counter electrode 22. The driving unit 84 applies a first voltage $V_1$ between each first electrode (lens end electrode) 12 and the counter electrode 22, applies a second voltage $V_2$ between each of the second electrodes (Fresnel electrodes) 14 and the fourth electrodes (auxiliary electrodes) 16 and the counter electrode 22, applies a third electrode $V_3$ between each third electrode (lens end auxiliary electrode) 16 and the counter electrode 22, and applies a reference voltage (GND) between each fifth electrode (central electrode) 19 and the counter electrode 22. For the purpose of convenience, in this specification, the state where the potentials of two electrodes are caused to be the same (i.e., the state of zero volts) is included in the case of applying a voltage.

The refractive index difference of a lens is the lowest at the lens ends. Accordingly, in many cases, the first voltage $V_1$ to be applied to each lens end electrode 12 is set to be high. If the thickness of the lens layer becomes thinner, in order to obtain the lens performance, uneven points are created as in a Fresnel lens, and the function of lens can be obtained by the gradient of refractive index difference. In many cases, the voltage to be applied to each lens end electrode 12 differs from the voltage to be applied to each Fresnel electrode 14 for controlling an uneven point. If the refractive index distribution from an uneven point to the lens center does not match the lens curve, it is possible to control the refractive index distribution by the auxiliary electrodes 18.

The first voltage $V_1$ and the second voltage $V_2$ can be either DC voltage or AC voltage. The polarities of the first voltage $V_1$, the second voltage $V_2$, and the third voltage $V_3$ can be changed periodically, for example. For example, the potential of the counter electrode 22 can be fixed, and the potential of each first electrode 12 can be changed by an alternating current. Alternatively, the polarity of the potential of the counter electrode 22 can be periodically changed, and in accordance with the change in polarity, the potential of each lens end electrode 12 can be changed to the reverse polarity, i.e., common inversion driving can be performed. In this manner, it is possible to decrease the power supply voltage of the driving circuit, thereby easing the withstand voltage specification of the driving IC.

In a case where the pretilt angle of the liquid crystal layer 30 is relatively small (for example, 10° or less), the threshold voltage Vth relating to the change in liquid crystal alignment of the liquid crystal layer 30 is relatively clear. In such a case, for example, the first voltage $V_1$ and the second voltage $V_2$ are set to be greater than the threshold voltage Vth. By applying a voltage, the liquid crystal alignment in the liquid crystal layer 30 is changed, and based on this change, a refractive index distribution is formed. The refractive index distribution is determined by the arrangement of the electrodes and the voltages to be applied to the electrodes.

FIG. 3 shows the operation waveforms of the first to the third voltage $V_1$, $V_2$, $V_3$ in the case where the optical path of the liquid crystal optical element 1 according to the embodiment is changed, i.e., the three-dimensional image display is enabled.

First, the first voltage $V_1$ applied to the lens end electrode 12 is set at a voltage Va, and the third voltage $V_3$ applied to the lens end auxiliary electrode 16 is set at a voltage Vc. The first voltage $V_1$ can be set at the Va after the third voltage $V_3$ is set at the voltage Vc. Thereafter, the second voltage $V_2$ applied to the Fresnel electrode 14 is set at a voltage Vb. The time $\tau_1$ after the first voltage $V_1$ is set at the voltage Va till the second voltage $V_2$ is set at the voltage Vb is greater than 0. The third voltage $V_3$ is changed to a voltage Vd when a predetermined time $\tau_2$ has passed after the first voltage V1 is set at the voltage Va. Incidentally, in FIG. 3, the polarities of the first to the third voltages $V_1$-$V_3$ are positive. The absolute value of the voltage Vb is less than the absolute value of the voltage Va, the absolute value of the voltage Vc is less than the absolute value of the voltage Vb, and the absolute value of the voltage Vd is less than the absolute value of the voltage Vc. For example, the absolute value of the voltage Va is 6 V, the absolute value of the voltage Vb is 3 V, and the absolute value of the voltage Vc is 1.5 V. Although it seems that immediately after the voltage is applied, the waveform thereof rises in FIG. 3, actually, there is a delay in response (response time) $\tau$ relating to the change of alignment in the liquid crystal molecules 32 of the liquid crystal layer 30. Accordingly, it is preferable that $\tau_1$ and $\tau_2$ shown in FIG. 3 be determined in consideration of the aforementioned response time. The response time $\tau$ after a voltage V is applied to the liquid crystal can be expressed by the following formula:

$$\tau(V) = \frac{d^2 \gamma}{\varepsilon_0 \Delta \varepsilon V^2 - \pi^2 K}$$

where d is the thickness of the liquid crystal layer 30, $\gamma$ is the rotational viscosity coefficient of the liquid crystal of the liquid crystal layer 30, $\varepsilon_0$ is the vacuum dielectric constant, $\Delta\varepsilon$ is the dielectric constant anisotropy of the liquid crystal layer 30, $\pi$ is the ratio of the circumference to the diameter, and K is the splay elastic constant.

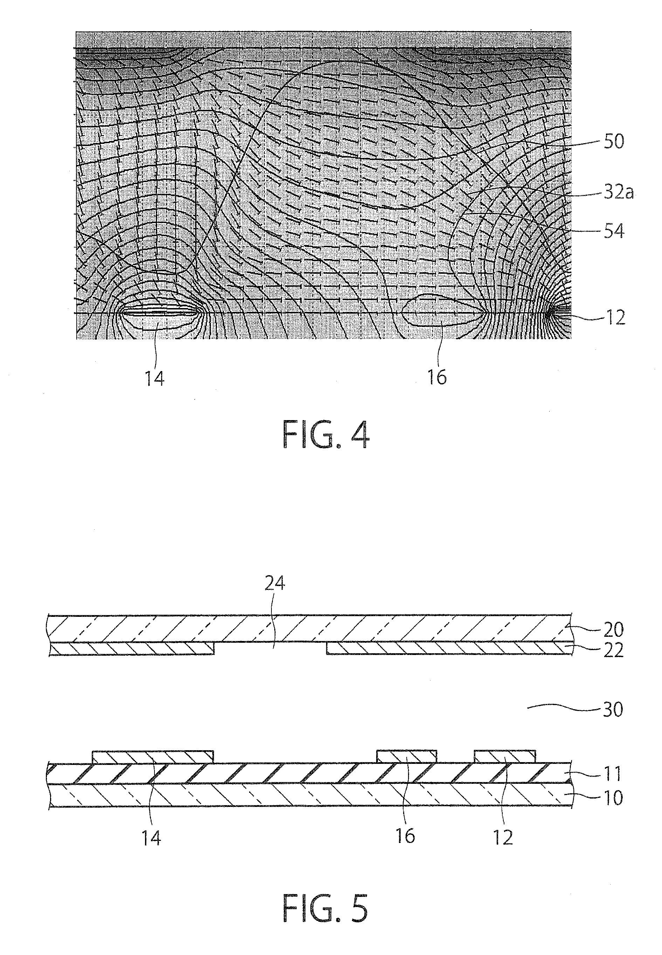

FIG. 4 shows a result of the simulation of the electric field distribution of the liquid crystal optical element 1 in the stationary state, after the drive waveforms shown in FIG. 3 are applied to the liquid crystal optical element 1 according to the embodiment and the third voltage $V_3$ is changed to Vd. The potential distribution shown in FIG. 4 is that of the portion A circled in FIG. 1. FIG. 5 shows an enlarged view of the portion A. In FIG. 4, the reference numeral 50 denotes a curve indicating the refractive index distribution, and the reference numeral 54 denotes an equipotential curve. The refractive index distribution 50 is a distribution of values obtained by dividing integrated values by the thickness of the liquid crystal, the integrated values being obtained by fixing positions in the X-axis direction and integrating values at the fixed positions in the direction of the thickness of the liquid crystal layer 30. That is, it is a distribution of the average values of the refractive index in the direction of the thickness. The lens end electrodes 12, the Fresnel electrode 14, and the lens end auxiliary electrode 16 are surrounded by a plurality of equipotential curves 54 each having a different potential. Incidentally, the reference numeral 32a denotes the long axes of the liquid crystal molecules explained with reference to FIG. 1.

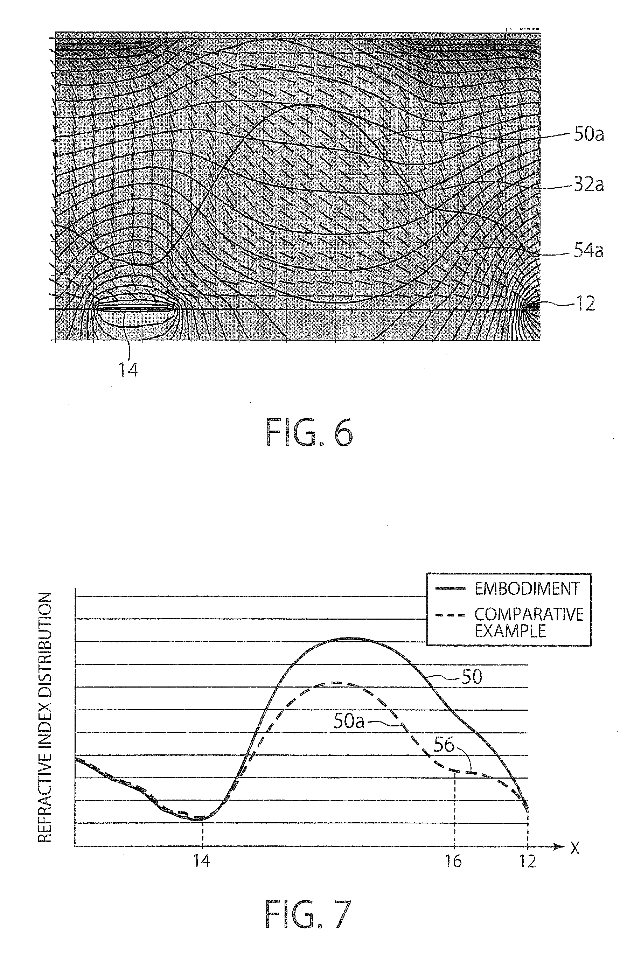

FIG. 6 shows a result of the simulation of an electric field distribution of a liquid crystal optical element according to a comparative example in the stationary state, which is obtained by eliminating the lens end auxiliary electrodes 16 from the liquid crystal optical element 1 shown in FIG. 1. In FIG. 6, the reference numeral 50a denotes a curve representing the refractive index distribution, and the reference numeral 54a denotes an equipotential curve. The refractive index distribution 50a is a distribution of values obtained by dividing integrated values by the thickness of the liquid crystal, the integrated values being obtained by fixing positions in the X-axis direction and integrating values at the fixed positions in the direction of the thickness of the liquid crystal layer 30. That is, it is a distribution of the average values of the refractive index in the direction of the thickness. Incidentally, in FIG. 6, the voltage applied to the lens end electrode 12 and the voltage applies to the Fresnel electrode 14 are the first voltage $V_1$ and the second voltage $V_2$ shown in FIG. 3, respectively.

FIG. 7 is a drawing obtained by combining the refractive index distribution 50 of the liquid crystal optical element 1 of the embodiment shown in FIG. 4 and the refractive index distribution 50a of the liquid crystal optical element of the comparative example shown in FIG. 6. As shown in FIG. 7, in the case of the comparative example which does not include the lens end auxiliary electrode, the distribution of the refractive index from the lens end to the Fresnel peak (the uneven point with a high refractive index) does not have a smooth connection, which causes a depression 56, and a relatively low Fresnel peak. If the refractive index is low, it is not possible to improve the performance even if a thin cell gap is employed. Incidentally, in FIG. 7, the horizontal axis shows positions in the x-axis direction, and the reference numerals 14, 16, and 12 represent the central positions of the Fresnel electrode 14, the lens end auxiliary electrode 16, and the lens end electrode 12.

Therefore, in the embodiment, the lens end auxiliary electrode 16 is located between the Fresnel electrode 14 and the lens end electrode 12, and the third voltage $V_3$ shown in FIG. 3 is applied thereto in order to adjust the potential distribution. In such a manner, it is possible to prevent the generation of depression in the refractive index distribution as shown in FIG. 7, resulting in that it is possible to improve the refractive index at the Fresnel peak.

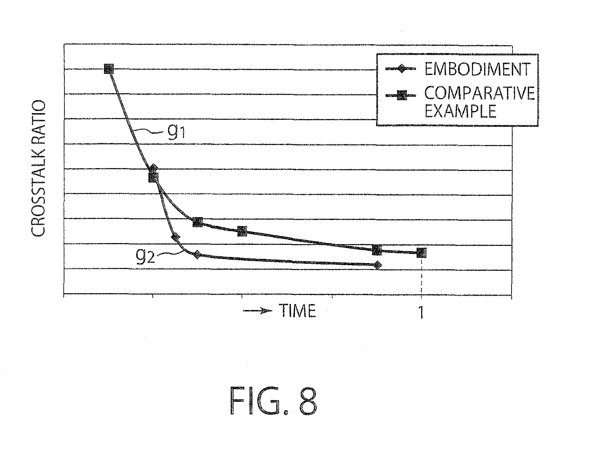

FIG. 8 shows in time series a result of the simulation of crosstalk in the case where a two-dimensional image display (i.e., the lens function is in the off state) is switched to a three-dimensional image display (i.e., the lens function is in the on state). Herein, the crosstalk is a value indicting a ratio of unnecessary components to the central angle of a ray of light in one parallax. The graph $g_1$ of FIG. 8 shows the crosstalk of the comparative example in which the liquid crystal optical element of the embodiment is driven in the condition that the first to the third voltages are constant. The graph $g_2$ of FIG. 8 shows the crosstalk of the embodiment, in which the liquid crystal optical element is driven in accordance with the drive waveforms shown in FIG. 3. In the simulation for obtaining the graph $g_2$, the voltage Vc corresponding to the third voltage $V_3$ shown in FIG. 3 has a potential close to the potential of the case where no lens end auxiliary electrode 16 is provided in the stationary state. A potential close to the potential of the case where no lens end auxiliary electrode 16 is provided in the stationary state means a potential of a portion of the electric field distribution shown in Fig. 6 around which the lens end auxiliary electrode 16 of this embodiment is provided. As can be understood form FIG. 8, if it is assumed that the time taken to saturate the crosstalk of the comparative example represented by the graph $g_1$ is 1, the time taken to saturate the crosstalk of the embodiment represented by the graph $g_2$ is about 1/4 to 1/3. That is, by using the driving method of the embodiment as shown in FIG. 3, it is possible to provide an effective refractive index distribution in a short time.

As described above, it is possible to provide a liquid crystal lens device and a method of driving the same, in which it is possible to obtain an effective refractive index distribution in a short time, thereby obtaining a high display quality.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fail within the scope and spirit of the inventions.

**Claims**

1. A liquid crystal lens device comprising:

   a first substrate;
   a pair of first electrodes on a first surface of the first substrate, extending in a first direction, and arranged in a second direction perpendicular to the first direction;
   a pair of second electrodes between the pair of first electrodes on the first surface, extending in the first direction, and arranged in the second direction;
   third electrodes each between one of the first electrodes and one of the second electrodes on the first surface, extending in the first direction, and arranged in the second direction;
   a second substrate comprising a second surface facing the first surface of the first substrate;
   a counter electrode on the second surface of the second substrate;
   a liquid crystal layer between the first substrate and the second substrate; and
   a driving unit configured to apply a first voltage between the first electrode and the counter electrode, to apply a second voltage comprising the same polarity as the first voltage between the second electrode and the counter electrode, and to apply a third voltage comprising the same polarity as the first voltage between the third electrode and the counter electrode, an absolute value of the second voltage being less than an absolute value of the first voltage, and an absolute value of the third voltage being less than the absolute value of the second voltage.

2. A liquid crystal lens device of claim 1, wherein after applying the second voltage to the second electrode, the driving unit changes the voltage applied to the third electrode to a fourth voltage having the same polarity as the third voltage, an absolute value of the fourth voltage being less than the absolute value of the third voltage.

3. A liquid crystal lens device of claim 1, wherein after applying the first voltage and the third voltage to the first electrode and the third electrode, the driving unit is configured to apply the second voltage to the second electrode.

**4.** A liquid crystal lens device of claim 1, wherein the driving unit is configured to apply the third voltage to the third electrode before applying the first voltage to the first electrode, or at the same time as applying the first voltage to the first electrode.

**5.** A liquid crystal lens device of claim 1, wherein a groove extending in the first direction is provided to a region of the counter electrode corresponding to a region between one of the second electrodes and one of the third electrodes.

**6.** A liquid crystal lens device of claim 1, wherein a plurality of fourth electrodes are provided between the pair of second electrodes, and the driving unit is configured to apply a voltage to the fourth electrodes.

**7.** A liquid crystal lens device of claim 1, wherein a fifth electrode is provided onto a center of the pair of second electrodes, and the driving unit is configured to apply a voltage to the fifth electrode, the voltage being the same as the a voltage applied to the counter electrode.

**8.** A method of driving a liquid crystal lens device, the liquid crystal lens device comprising:

> a first substrate;
> a pair of first electrodes on a first surface of the first substrate, extending in a first direction, and arranged in a second direction perpendicular to the first direction;
> a pair of second electrodes between the pair of first electrodes on the first surface, extending in the first direction, and arranged in the second direction;
> third electrodes each between one of the first electrodes and one of the second electrodes on the first surface, extending in the first direction, and arranged in the second direction;
> a second substrate comprising a second surface facing the first surface of the first substrate;
> a counter electrode on the second surface of the second substrate; and
> a liquid crystal layer between the first substrate and the second substrate,
> the method comprising:
>
>> applying a first voltage between the first electrode and the counter electrode, applying a second voltage comprising the same polarity as the first voltage between the second electrode and the counter electrode, and applying a third voltage comprising the same polarity as the first voltage between the third electrode and the counter electrode, an absolute value of the second voltage being less than an absolute value of the first voltage, and an absolute value of the third voltage being less than the absolute value of the second voltage.

**9.** The method of driving a liquid crystal lens device according to claim 8, further comprising:

> applying the second voltage to the second electrode; and
> changing the voltage applied to the third electrode from the third voltage to a fourth voltage comprising the same polarity as the third voltage, an absolute value of the fourth voltage being less than the absolute value of the third voltage.

FIG. 1

EP 2 728 404 A2

100

FIG. 2

FIG. 3

FIG. 4

FIG. 5

50a

32a

54a

12

14

FIG. 6

EMBODIMENT

COMPARATIVE EXAMPLE

50

50a

56

14

16

12

X

REFRACTIVE INDEX DISTRIBUTION

FIG. 7

FIG. 8